**Europäisches Patentamt**

**European Patent Office**

**Office européen des brevets**

(19)

(11) Veröffentlichungsnummer: **0 049 734**
**B1**

(12) # EUROPÄISCHE PATENTSCHRIFT

(45) Veröffentlichungstag der Patentschrift:
10.10.84

(51) Int. Cl.³: **B 64 G 1/28**

(21) Anmeldenummer: **81104712.5**

(22) Anmeldetag: **19.06.81**

(54) **Vorrichtung zum kontrollierten Ausfahren einer an einem mit Drall versehenen Satellitenkörper befestigten flexiblen Auslegerverbindung.**

(30) Priorität: **09.10.80  DE 3038095**

(43) Veröffentlichungstag der Anmeldung:
**21.04.82 Patentblatt 82/16**

(45) Bekanntmachung des Hinweises auf die Patenterteilung:
**10.10.84 Patentblatt 84/41**

(84) Benannte Vertragsstaaten:
**FR GB**

(56) Entgegenhaltungen:
**DE - A - 548 624**
**DE - A - 828 908**
**DE - A - 1 960 779**
**DE - B - 1 226 886**
**GB - A - 1 310 392**
**US - A - 3 277 486**
**US - A - 3 437 286**

(73) Patentinhaber: **DORNIER SYSTEM GmbH,**
**Postfach 1360, D-7990 Friedrichshafen (DE)**

(72) Erfinder: **Schmidt, Günther, Dipl.-Ing.,**
**Friedrichshafenerstrasse 38, D-7997 Immenstaad (DE)**
Erfinder: **Etzler, Carl-Christian, Dipl.-Ing.,**
**Möwenstrasse 12, D-7990 Friedrichshafen (DE)**

(74) Vertreter: **Landsmann, Ralf, Dipl.-Ing., Kleeweg 3,**
**D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine Vorrichtung zum kontrollierten Ausfahren einer an einem mit Drall versehenen Satellitenkörper befestigten flexiblen Auslegerverbindung, zum Beispiel Auslegerkabel mit daran angeordnetem Ausleger.

An Raumflugkörpern, insbesondere Satelliten, ist es unter Umständen notwendig, Meßfühler oder Proben in einem mehr oder weniger großen Abstand vom Satellitenkörper zu positionieren. Dazu finden an sich bekannte Mechanismen wie Gelenkausleger, Kabelausleger, Teleskope und andere Verwendung. Bei mit einem Spin bzw. Drall versehenen Satelliten werden zum Beispiel Kabelausleger ausgerollt, die infolge der beim Spin auftretenden Zentrifugalkräfte gestreckt werden. Derartige und aus der Praxis bekannte Vorrichtungen von Auslegern eignen sich besonders für größere Ausfahrlängen und werden vorzugsweise von rotierenden Spulen abgewickelt. Dabei ergeben sich meist Schwierigkeiten, unter anderem bei der elektrischen Verbindung zwischen der rotierenden Aufwickelspule und dem stationären Gehäuse der Auslegervorrichtung.

Eine andere Art von Kabelauslegern wird zum Reduzieren der Spindrehzahlen von Satelliten verwendet und ist bekannt unter der Bezeichnung Jo-Jo. Dabei wird eine Masse, die am Ausleger befestigt und damit um den Satelliten gewickelt ist, nach Freigabe durch einen dazu vorgesehenen Mechanismus, vom Satelliten wieder abgewickelt, wodurch gemäß dem Gesetz der Erhaltung des Drehimpulses die Spinzahl des Satelliten verringert wird. Gegen Ende des Abwickelvorganges muß der Ausleger ausgeklinkt und abgeworfen werden, da er sich sonst wieder aufwickeln und den Ausgangszustand einnehmen würde. Außerdem ergeben sich durch die wiederholten Ab- und Aufwickelvorgänge erhebliche Störungen für die Stabilität des Satelliten.

Eine dem Oberbegriff des Anspruchs 1 entsprechende Vorrichtung ist beispielsweise aus der US-PS 3 277 486 bekannt, bei der ein Satellitenkörper aus- und einfahrbare Antennen aufweist, an deren Enden kleine Massenkörper angeordnet sind. Die Antennen sind auf einer Spule befestigt und in Nuten spiralförmig aufgewickelt. Die Spule wird über ein Schneckengetriebe von einem Motor angetrieben, wodurch je nach Bedarf ein Aus- und Einfahren der Antennen bewirkt wird. Die an den Enden der Antennen angeordneten Massenkörper wirken infolge der Fliehkraft dem Drall des Satellitenkörpers entgegen, so daß, je nach Ausfahrlänge der Antennen, die Drehzahl des Satellitenkörpers verringert oder erhöht werden kann. Hierbei ist von Nachteil, daß, abgesehen vom komplizierten und gewichtigen Aufbau (Getriebe, Motor), durch das wiederholte Aus- und Einfahren der Antennen die elektrisch leitenden Komponenten durch Abrieb oder Bruch in Mitleidenschaft gezogen werden oder gar ausfallen. Die in den Nuten aufgewickelten Antennen sind gegebenenfalls durch am Umfang der Nuten angeordnete Halteorgane gegen ein Herausfallen gesichert. Aus der DE-PS 548 624 ist eine Vorrichtung zur Verhütung von Schlappseil auf Seiltrommeln bekannt. Hier sind die Trommeloberfläche oder die Seilrollen mit federnden Vorrichtungen versehen, die das Seil nach dem Auflaufen auf die Trommel oder dem Einlegen in die Rillen selbsttätig festhalten. Eine derartige Vorrichtung ist für eine Anwendung zum kontrollierten Ausfahren einer an einem mit Drall versehenen Satellitenkörper befestigten flexiblen Auslegerverbindung ungeeignet, da sie schon von der Aufgabenstellung her fernesteht.

Nachteilig ist ferner bei allen derartigen Vorrichtungen, daß bei elektrischen Kabelauslegern zwischen dem Satellitenkörper bzw. den darin untergebrachten elektrischen Komponenten und den diesen zugeordneten Auslegern Probleme hinsichtlich der elektrischen Verbindung auftreten, zum Beispiel Bruch der im Auslegerkabel angeordneten elektrischen Verbindung.

Davon ausgehend ist es Aufgabe der Erfindung eine einfache Vorrichtung zu schaffen, mit der sowohl für kleine und große Längen ein kontrolliertes Ausfahren des oder der Ausleger am Satelliten als auch eine sichere elektrische Verbindung gewährleistet ist.

Erfindungsgemäß sind zur Lösung der gestellten Aufgabe die kennzeichnenden Merkmale von Anspruch 1 vorgesehen, wobei besondere Ausführungsarten in den abhängigen Ansprüchen angegeben sind.

Der Vorteil der Erfindung besteht insbesondere darin, daß die potentielle Energie, die beim Abwickeln der Auslegerverbindung vom Satellitenkörper (Jo-Jo) kontinuierlich in kinetische Energie übergeht und (im Jo-Jo) gespeichert wird, durch die erfindungsgemäße Verbindung zu einem wesentlichen Teil absorbiert wird. Dadurch wird die Abwickel- bzw. Ausfahrgeschwindigkeit entscheidend verringert und ist dabei innerhalb gewisser Grenzen vorwählbar oder kann vorübergehend auf den Wert Null reduziert werden. Die Spindrehzahl des Satelliten wird dadurch in gleicher Weise wie beim Ausfahren des Auslegers am Jo-Jo verringert, nur wickelt sich die kontrolliert ausgefahrene Auslegerverbindung anschließend nicht wieder auf und muß deshalb auch nicht wie beim konventionellen Jo-Jo abgeworfen werden. Auch sind die während des Ausfahrens der Auslegerverbindung mit Ausleger auf den Satellitenkörper rückwirkenden Störeinflüsse wesentlich geringer.

Ausführungsbeispiele sind nachfolgend beschrieben und durch Skizzen erläutert.

Es zeigen

Fig. 1a, b die Anordnung eines Auslegerkabels an einem Satellitenkörper,

Fig. 2a, b Halteorgane und damit gehaltenes Auslegerkabel gemäß Fig. 1a,

Fig. 3 ein Halteorgan mit Auslegerkabel und elastischen Lippen,

Fig. 4 ein aus zwei Schläuchen bestehendes Halteorgan und darin gehaltenes Auslegerkabel,
Fig. 5 ein Halteorgan mit Austrittsblockierung.

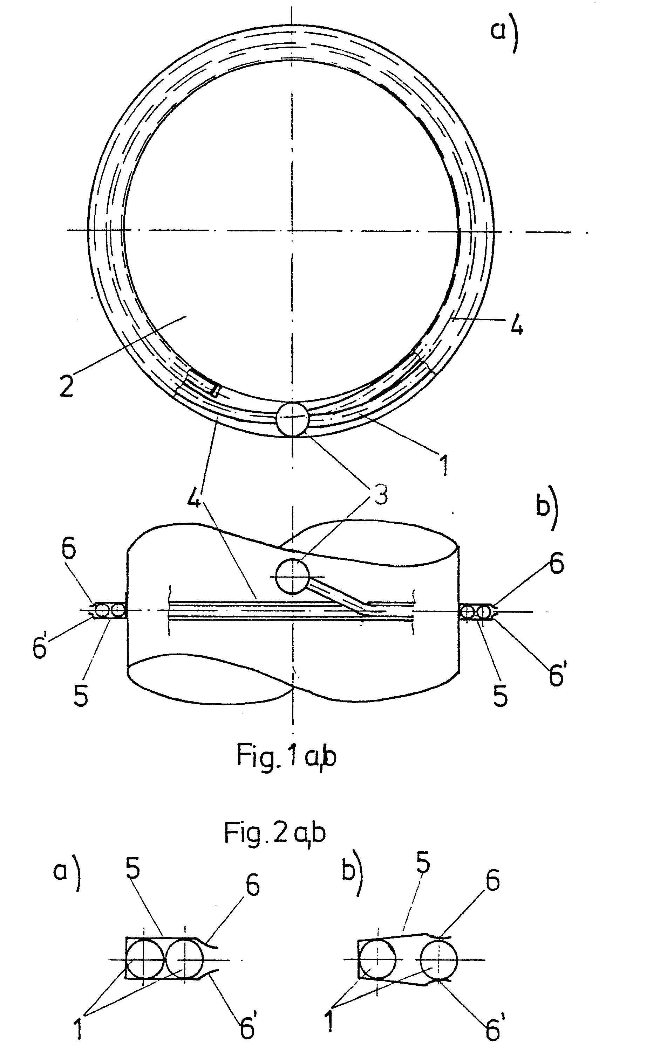

Aus Fig. 1a und b ist die prinzipielle Anordnung eines Auslegerkabels 1 an bzw. um einen Satellitenkörper 2 ersichtlich. Fig. 1a zeigt den Satellitenkörper 2 mit darumgelegtem Auslegerkabel 1 und einem Ausleger 3 in der Ansicht von oben, Fig. 1b dagegen von der Seite. Das Auslegerkabel 1 ist Jo-Jo-artig in eine am Satellitenkörper 2 angeordnete Nut 4 und daran befestigten elastischen Halteorganen 5, z. B. zwei sich gegenüberstehende teilweise profilierte Federblätter 6, 6′ gelegt und gehalten.

Die Fig. 2a und b zeigen die elastischen Halteorgane 5 mit den teilweise profilierten Federblättern 6, 6′ und dem von diesen gehaltenen (Fig. 2a) bzw. dem unter deren Verformung daraus austretenden Auslegerkabel 1 (Fig. 2b).

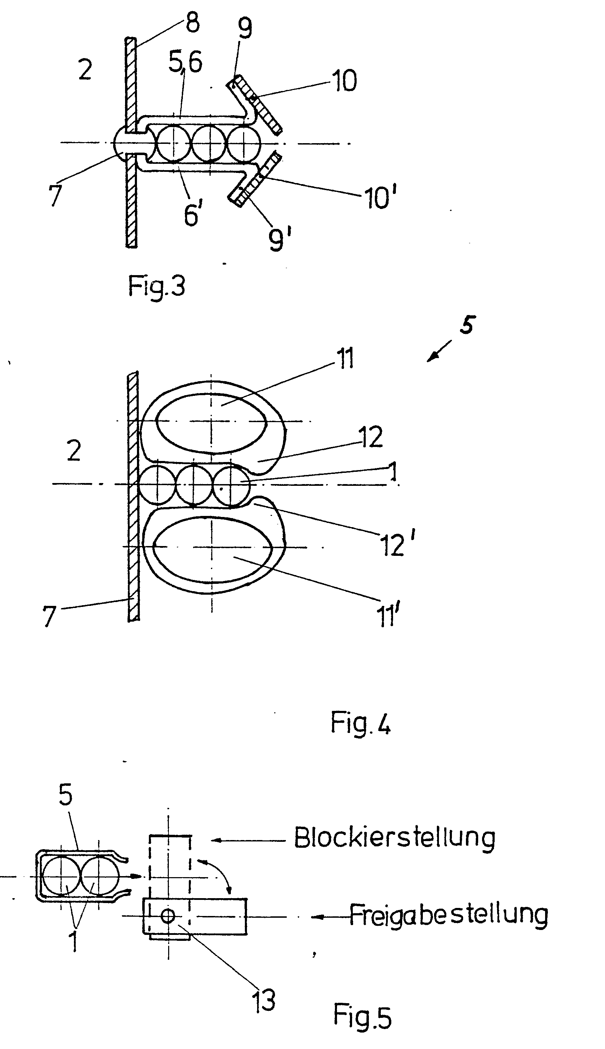

Aus Fig. 3 ist eine Variante eines elastischen Halteorgans 5 mit darin durch die Federblätter 6, 6′ gehaltenem Auslegerkabel 1 ersichtlich. Das Halteorgan 5 ist mittels Niet 7 an der Wand 8 des Satellitenkörpers 2 befestigt. An der Offenseite des Halteorgans 5 weisen die Federblätter 6, 6′ nach außen abgewinkelte Flächen 9, 9′ auf, worauf lippenartig ausgebildete Gummiblätter 10, 10′ als Austrittsblockierung angeordnet sind.

Fig. 4 stellt ein aus zwei elastischen Ringen oder Schläuchen 11, 11′ (aufblasbar oder Vollmaterial) bestehendes Halteorgan 5 dar. Die beiden sich gegenüberstehenden Ringe oder Schläuche 11, 11′ sind zur Aufnahme und Halterung des Auslegerkabels 1 entsprechend geformt bzw. mit Profilen 12, 12′ versehen und liegen an der Wand 7 des Satellitenkörpers 2 an.

In Fig. 5 ist ein Halteorgan 5 mit einer an seiner Austrittsseite klappbar angeordneten Austrittsblockierung 13 dargestellt. Durch Verstellen bzw. An- oder Abklappen (siehe Richtungspfeil) der Austrittsblockierung 13 kann das im Halteorgan 5 gelagerte Auslegerkabel 1 gegen ein Ausfahren blockiert oder freigegeben werden.

## Patentansprüche

1. Vorrichtung zum kontrollierten Ausfahren einer an einem mit Drall versehenen Satellitenkörper (2) befestigten flexiblen Auslegerverbindung, zum Beispiel Auslegerkabel, mit daran angeordnetem Ausleger (3), dadurch gekennzeichnet, daß am Umfang des Satellitenkörpers (2) wenigstens eine Nut (4) zur Aufnahme der Auslegerverbindung (1) vorgesehen ist und zum Halten der Auslegerverbindung (1) an der Nutöffnung wenigstens ein elastisches Halteorgan (5) angeordnet ist.

2. Vorrichtung nach Anspruch 1, dadurch gekennzeichnet, daß Halteorgane (5) längs der Nutöffnung in einer beliebig verteilten Anzahl angeordnet sind.

3. Vorrichtung nach den Ansprüchen 1 und 2, dadurch gekennzeichnet, daß das bzw. die Halteorgane (5) mit elastischen Lippen (10, 10′) versehen sind.

4. Vorrichtung nach den Ansprüchen 1 bis 3, dadurch gekennzeichnet, daß das bzw. die Halteorgane (5) mit einer Austrittsblockierung (13) versehen sind.

5. Vorrichtung nach Anspruch 1, dadurch gekennzeichnet, daß das bzw. die Halteorgane (5) aus zwei sich gegenüberstehenden elastischen schlauchförmigen Komponenten, z. B. Ringe oder Schläuche (11, 11′) bestehen.

## Claims

1. A device for the controlled running out of a flexible boom connection attached to a spinning satellite structure (2), e. g. pay-out cable with pay-out means (3) thereon characterized in that at the periphery of the satellite body (2) at least one groove (4) is provided for the envelopment of the boom connection (1) and that at least one elastic holding means (5) is arranged for holding the boom connection (1) at the groove aperture.

2. A device according to claim 1, characterized in that the holding means (5) are arranged along the groove aperture in an arbitrarily distributed number.

3. A device according to claim 1 and 2, characterized in that the holding means (5) are provided with elastic lips (10, 10′).

4. A device according to claims 1 to 3, characterized in that the holding means (5) are provided with an exit lock (13).

5. A device according to claim 1, characterized in that the holding means (5) are composed of two mutually opposite elastic tubular components, for instance rings or hoses (11, 11′).

## Revendications

1. Dispositif pour le déploiement contrôlé d'un lien flexible de console fixé à un satellite (2) en giration, par exemple un câble de console avec une console (3) montée sur lui, caractérisé par le fait qu'il est prévu à la périphérie du satellite (2) au moins une gorge (4) pour recevoir le lien de console (1) et qu'il est prévu pour retenir le lien de console (1) à l'ouverture de la gorge au moins un organe de retenue élastique (5).

2. Dispositif selon la revendication 1, caractérisé par le fait que les organes de retenue (5) sont disposés le long de l'ouverture de la gorge en nombre et répartition quelconques.

3. Dispositif selon les revendications 1 et 2, caractérisé par le fait que le ou les organes de retenue (5) sont munis de lèvres élastiques (10, 10′).

4. Dispositif selon les revendications 1 à 3, caractérisé par le fait que le ou les organes de retenue (5) sont munis d'un blocage de sortie (13).

5. Dispositif selon la revendication 1, caractérisé par le fait que le ou les organes de retenue (5) sont constitués de deux composants élastiques en forme de tuyaux en regard, par exemple des anneaux ou des tuyaux (11, 11′).

Fig. 1 a,b

Fig. 2 a,b

0 049 734

Fig.3

Fig.4

Blockierstellung

Freigabestellung

Fig.5